# EUROPEAN PATENT APPLICATION

(11) **EP 4 477 532 A1**
(43) Date of publication of application: **18.12.2024**
(21) Application number: 23305960.9
(22) Date of filing: 16.06.2023
(51) Int. Cl.: B64C 9/04, B64C 9/16, B64C 9/06

(54) **AN AIRCRAFT WING**

(71) Applicant: Airbus Operations (S.A.S.), 31060 Toulouse Cedex 9 (FR); Airbus Operations Limited, Bristol BS34 7PA (GB)
(72) Inventor: FAMILY, Oliver, BRISTOL, BS34 7PA (GB); BLANC, Sébastien, 31060 TOULOUSE (FR)
(74) Representative: Cabinet Le Guen Maillet

(57) **Abstract**

A wing (8) defines a chord (28) which runs from a leading edge (24) to a trailing edge (26). The wing (8) has a main portion (20) and a flap (22) which is movable relative to the main portion so as to change the aerodynamics of the wing (8), for instance to maximise lift, or to reduce drag at the expense of some loss of lift. The wing (8) has a guide mechanism (64) which guides movement of the flap (22). The guide mechanism (64) uses a pair of runners (80, 82) which run along respective tracks (76, 78). The tracks (76, 78) are positioned at different locations along the direction of the chord (28), but overlap one another in the direction of the chord (28).

## Description

### BACKGROUND OF THE INVENTION

The present disclosure relates to the field of aircraft wings. It relates particularly, but not exclusively, to an aircraft wing, an aircraft comprising such a wing, and a method of using such an aircraft.

Conventional aircraft wings often have one or more flaps which can be moved to tailor the geometry of the wing to the circumstances at the time. For example, the flaps can be moved rearwards and rotated downwards for takeoff and landing, to place the wing in a "high lift" state. Moving the flaps rearward increases the length of the chord of the wing, and therefore increases wing area. Rotating the flaps downward increases the angle of attack of the wing. With the flaps in this position, the lift produced by the wing is maximised, meaning that the aircraft can become airborne (in the case of takeoff) or remain airborne at a lower speed (in the case of coming in to land).

With the flaps in this position lift is maximised, but that comes at the expense of increased drag. Accordingly, for cruising the flaps are moved forward and up again so as to reduce the length of the chord and reduce wing area, and reduce the angle of attack, thereby placing the wing in a "low drag" state. With the flaps in this position the lift generated by the wing is reduced, but at cruise speed the lift is still sufficient to keep the aircraft airborne, and the drag generated by the wing is reduced. Lower drag means that less power (i.e. less fuel) is required to maintain the aircraft's speed, therefore the aircraft can fly more energy efficiently.

While the ability of the wing geometry to be adjusted is beneficial, the conditions at which an aircraft may need to cruise are not always identical. Differences in aircraft speed or weight, and differences in air pressure, affect the wing geometry at which sufficient lift is generated with the least possible drag. The geometry of a conventional wing in its "low drag" state must be selected to ensure that sufficient lift can be generated for any foreseeable combination of the above factors (e.g. a heavily-laden aircraft, flying unusually slowly through unusually thin air). However, this means that when conditions are more favourable, the wing generates more lift than is required, at the cost of more drag. Also, conventional mechanisms for moving flaps are often suffer from drawbacks such as being relatively complex, expensive, bulky, high-maintenance and/or heavy. Instead or as well, such mechanisms can support the flap with an undesirable amount of 'play', making it more difficult for the flap to be held in precisely the right location.

The present invention seeks to mitigate one or more of the above-mentioned problems. Alternatively or additionally, the present invention seeks to provide an improved or alternative aircraft wing, aircraft or method of using an aircraft.

### SUMMARY OF THE INVENTION

According to a first aspect of the present disclosure there is provided an aircraft wing defining a chord that extends from a leading edge to a trailing edge of the wing, the wing comprising:
a main portion which provides the leading edge;
a movable flap which provides the trailing edge; and
an actuation mechanism arranged to move the flap relative to the main portion, the actuation mechanism comprising an actuator and a guide mechanism,
wherein:
the guide mechanism comprises first and second tracks each fixed relative to the main portion, and first and second runners each being fixed relative to the flap;
the first runner is movable along the first track and the second runner is movable along the second track, movement of the runners along the tracks co-operatively guiding the movement of the flap; and
along the direction of the chord, the first and second tracks occupy different positions but overlap with one another.

The guide mechanism using tracks and runners fixed to the main portion and flap respectively may allow it to be advantageously lightweight, robust and/or compact in comparison to other mechanisms for moving a flap. The use of two tracks at different positions along the direction of the chord may allow the guide mechanism to be more stable and/or rigid in a direction normal to the chord, thereby preventing or reducing unwanted up/down movement of the flap. The two tracks overlapping along the direction of the chord can allow the guide mechanism to be more compact, which may be advantageous in of itself and/or may provide advantages in terms of the aerodynamics of a fairing which houses the guide mechanism.

The first and/or second track may be a slot and the associated runner(s) may be a projection slidably received within said slot. Instead or as well, the first and/or second track may be a rail and the associated runner(s) may be a carriage slidably received on or around said rail.

The term "fixed relative to" may be interpreted to mean "immovable in normal use relative to". The term is intended to encompass slight relative movement due to elastic deformation or the like.

Along the direction of the chord, the first and second tracks may overlap by at least 20%, for instance at least 30% or at least 40%, of the length of one or both of the tracks.

The tracks overlapping to such an extent may allow the guide mechanism to be particularly compact and thereby provide one or more of the above advantages to a particularly beneficial extent.

Reference herein to the position or length of a track is intended to refer to the usable part of the track, discounting any portion of the track over which the associated runner cannot move in normal use.

Reference herein to the tracks overlapping by a certain percentage of the length of both tracks is intended to refer to the tracks overlapping by at least that percentage of the first track, and at least that percentage of the second track (i.e. at least that percentage of the length of each track). It is not intended to refer to the tracks overlapping by at least that percentage of the total combined length of both tracks together.

Along the direction of the chord, the first and second tracks may overlap by less than 80%, for instance less than 70% or less than 60%, of the length of one or both of the tracks.

This may improve the stability or rigidity with which the flap is supported by the guide mechanism. Accordingly, in some cases there may be a balance to be struck between a large overlap for the sake of compactness, and a small overlap for the sake of stability/rigidity.

Where along the direction of the chord the first and second tracks overlap by at least 20%, 30% or 40% of the length of one of the tracks, and also overlap by less than 80%, 70% or 60% of the length of one of the tracks, said one of the tracks may be the same track in both cases. Alternatively, the tracks may overlap by at least 20%, 30% or 40% of the length of one of the tracks, but overlap by less than 80%, 70% or 60% of the length of the other of the tracks.

Along a thickness direction which is normal to the chord of the wing and to a longitudinal axis of the wing, the first and second tracks may overlap with one another.

The tracks overlapping in the thickness direction may provide still further benefits in terms of compactness of the guide mechanism. Further, compactness in the thickness dimension may have particular benefit in terms of the aerodynamics of a fairing containing the guide mechanism.

In the thickness direction the first and second tracks may overlap with each other by at least 25%, for instance at least 50% or at least 75%, of the length of one or both of the tracks.

The tracks overlapping to this extent may further increase the benefit provided in terms of compactness.

In the thickness direction, one of the tracks may be overlapped entirely by the other of the tracks.

The flap may have positions in which it is only movable by translation, for instance only movable in a direction generally parallel to the chord.

The first track may have a straight portion which runs substantially parallel to a straight portion of the second track.

The straight portions of the tracks running parallel may allow the flap to follow a linear path without rotation. For instance, the straight portions may allow the flap to move in pure Fowler motion.

For the avoidance of doubt, reference to the straight portions being parallel is intended to include the straight portions being collinear.

The flap may have positions in which it is only movable by combined rotation and translation, for instance rotation downwards and movement generally along the chord away from the leading edge.

The first and second tracks may comprise respective sections which converge towards one another or diverge away from one another.

The converging or diverging portions may allow the flap to rotate as it moves. For instance, the converging or diverging portions may allow the flap to rotate so as to lower the trailing edge and thereby increase the angle of attack of the wing.

As an alternative, the first and second tracks may run entirely parallel to one another, in which case either the flap may be incapable of rotation or the flap may be guided for rotation by a separate mechanism.

The first and second runners may be mounted to a common mounting member, the common mounting member being attached to the flap.

This can reduce the weight of the guide mechanism, and thus of the wing as a whole, in comparison to arrangements where two mounting members (one for each runner) are used. Instead or as well, use of a single, common, mounting member can allow assembly of the guide mechanism to be quicker and therefore cheaper.

The common mounting member may be a plate, for instance a plate on which or through which the runners are mounted. As another example, the mounting member may be a generally two-dimensional or a three-dimensional frame-like structure.

The flap may comprise a main body and a movable tab which provides the trailing edge of the wing, and the wing comprises a tab operation mechanism arranged to move the tab relative to the main body of the flap.

The tab being movable can advantageously increase the extent to which the geometry of the wing can be changed. For sake of example, the wing may be arranged whereby when it is desired to maximise the angle of attack, the trailing edge can be lowered by rotating the flap down, and lowered further by also rotating the tab of the flap down.

The tab operation mechanism may be arranged to move the tab independently of movement of the flap.

This can further increase the versatility of the wing and/or improve the level of control over the geometry of the wing. For sake of example, the flap can be moved by the actuation mechanism so as to adjust the amount of lift being generated in flight, and independently of this the tab can function as an aileron so to control the roll of the aircraft.

The tab may be pivotable relative to the main body of the flap. As an alternative, the tab may be movable purely in translation. As another example, the tab may be movable relative to the main body in both rotation and translation.

The wing may further comprise a shroud panel positioned to extend between the main portion of the wing and the flap.

This may smooth the flow of air passing over the wing, thereby improving the aerodynamic performance of the wing.

The shroud panel may be movably mounted, for instance pivotably mounted, on the main portion of the wing, and may have a trailing portion which contacts the flap.

This may allow the shroud panel to smooth the flow of air at a variety of positions of the flap, by moving/pivoting to match the changes in wing geometry caused by movement of the flap.

Where the shroud panel is movably mounted on the main portion of the wing, the shroud panel may be biased into contact with the flap. The shroud panel may be biased e.g. by a resilient member, by elastic deformation of the shroud panel itself, or under action of an actuator.

As an alternative, the shroud panel may be movably mounted on the main portion of the wing but may be freely movable, at which point it may be held against the flap by air passing over the wing. As another example, the shroud panel may be fixed in place (in which case the shroud panel may flex to accommodate movement of the flap, or some degree of gap between the shroud panel and the flap may be tolerated.

The shroud panel may be connected to a deployment mechanism, and may be deployable by the deployment mechanism to function as a spoiler and/or an air brake.

The shroud panel may be positioned on an upper surface of the wing. Alternatively, the shroud panel may be positioned on an underside of the wing.

The wing may comprise an upper shroud panel positioned on an upper surface of the wing, and a lower shroud panel positioned on an underside of the wing. Either one or both the upper and lower shroud panels may have one or more of the features discussed above.

The actuator may be arranged to hold the flap in position (for instance in conjunction with the guide mechanism). For instance, the actuator may have an anti-backdrive mechanism or a brake mechanism.

The actuator may take any suitable form. For instance, it may be a hydraulic actuator or an electric linear actuator. The actuator may act directly on the flap, or indirectly on the flap via one or more other components (such as a mounting member by which one or both the runners are attached to the flap).

The flap may be movable to a position in which an air flow gap is provided between the flap and the and the main portion. This position may be the third position as described above.

According to a second aspect of the present disclosure there is provided an aircraft wing having a front edge, and a rear edge provided on a movable flap of the wing, wherein:
the wing defines a chord which extends between the front edge and the rear edge;
the wing further comprises a drive assembly arranged to move the flap;
the drive assembly has first and second tracks which occupy different but overlapping positions along the direction of the chord; and
the flap has first and second runners which are fixed relative to the flap, the first runner being movable along the first track and the second runner being movable along the second track so as to cooperatively direct the movement of the flap.

The use of tracks and runners may be an advantageously lightweight, robust and/or compact mechanism for directing movement of the flap. The use of two tracks occupying different positions along the direction of the chord may allow the flap to move advantageously stably and/or rigidly in a direction normal to the chord, thereby preventing or reducing unwanted up/down movement of the flap. The two tracks having overlapping positions along the direction of the chord can allow the drive assembly to be more compact, which may be advantageous in of itself and further may provide advantages in terms of the aerodynamics of a fairing which houses the guide mechanism.

According to a third aspect of the present disclosure there is provided an aircraft comprising a wing according to the first or second aspect of the disclosure.

The aircraft may comprise port and starboard wings, each wing being a wing according to the first or second aspect of the invention.

According to a fourth aspect of the present disclosure there is provided a method of using an aircraft according to the third aspect of the disclosure, the method comprising:
ascending to cruising altitude;
while at cruising altitude, moving the flap from a first position in which the chord has a first length, to a second position in which the chord has a second length which is shorter than the first length.

Shortening the chord by moving the flap to the second position can optimise the amount of lift produced by the wing, and the associated amount of drag, for the conditions experienced at the time. This, in turn, can allow the aircraft to cruise with reduced drag (by selecting the geometry at which sufficient lift is provided, for the least possible drag). The reduced drag, in turn, can improve the fuel efficiency with which the aircraft can fly.

The method may further comprise accelerating to cruising speed, before during and/or after ascending to cruising altitude.

The step of ascending to cruising altitude (and accelerating to cruising speed, where applicable) may comprise taking off.

Cruising altitude may be at least 5,000 feet, for instance at least 10,000 feet, at least 15,000 feet or at least 18,000 feet. Instead or as well, cruising altitude may be no more than 70,000 feet, for instance no more than 60,000 feet, no more than 50,000 feet or no more than 46,000 feet.

The second length of the chord may be at least 2%, for instance at least 3% or at least 4%, shorter than the first length of the chord.

Shortening the chord to this extent may magnify the above advantage of improved fuel efficiency.

The second length of the chord may be no more than 10%, for instance no more than 8% or no more than 6%, less than the first length of the chord. This can allow the mechanisms responsible for moving the flap between positions to be advantageously compact, light simple to maintain and/or inexpensive, in comparison to mechanisms which must provide a greater degree of movement between positions.

The method may further comprise comparing the weight of the aircraft to a threshold, and moving the flap from the first position to the second position only if the weight of the aircraft is below the threshold.

When the aircraft is relatively light is one of the times when it may be possible to reduce excess lift so as to reduce drag and improve energy efficiency.

Instead or as well, the method may further comprise comparing the speed of the aircraft to a threshold, and moving the flap from the first position to the second position only if the speed of the aircraft is above the threshold.

Instead or as well, the method may further comprise comparing the air pressure surrounding the aircraft to a threshold, and moving the flap from the first position to the second position only if the air pressure is above the threshold.

Instead or as well, the method may further comprise comparing altitude aircraft to a threshold, and moving the flap from the first position to the second position only if the altitude is below the threshold.

The step of moving the flap from the first position to the second position may comprise moving the flap substantially only in translation.

The flap moving substantially only by translation, i.e. with substantially no rotation, may bring about the required change in chord length with advantageously little affect on the other aerodynamic properties of the wing (such as its angle of attack).

Said translation may be pure Fowler motion, i.e. movement along the direction of the chord.

The method may further comprise moving the flap from a third position to the first position, before moving the flap from the first position to the second position.

Moving the flap from the third position to the first position may comprise rotating the flap. It may comprise moving the flap only in rotation, or may comprise rotating the flap and also moving it in translation.

The step of moving the flap from the third position to the first position may take place before, during and/or after the step of ascending to cruising altitude. In one example the method comprises taking off with the flap in the third position, and moving the flap to the first position before reaching cruising altitude.

The method may further comprise descending from cruising altitude and moving the flap from the second position to the first position. The flap may be moved from the second position to the first position before, during or after the step of descending from cruising altitude.

The method may further comprise moving the flap from the first position to the third position and then landing the aircraft.

According to a fifth aspect of the present invention there is provided a method of using an aircraft according to the third aspect of the invention, the method comprising:
during flight, determining a load being experienced by the wing;
comparing the determined load to a threshold; and
if the load is above the threshold, moving the flap away from the first position and towards the second position.

By moving the flap towards the second position, the lift generated by the wing may be reduced. This, in turn, can reduce the loading experienced by the wing. This can be advantageous if, for example, the loading on the wing is above the threshold due to an unexpected gust of wind. The reduction in lift caused by movement of the flap can compensate for unexpected levels of lift, thereby reducing the loading on the wing back towards normal levels. The reduced loading can increase the service interval of the wing by reducing fatigue loading, and/or can avoid shaking of the aircraft which may impact on the comfort of the pilot and passengers of the aircraft.

If the load is above the threshold the flap may be moved part way to the second position, all the way to the second position, or even towards and then past the second position.

The load may be determined directly, for instance using embedded strain gauges. Instead or as well, the load may be determined using an analogue such as displacement of a part of the wing (displacement of the wing being a function of its loading) or localised wind speed (wind speed affecting the lift generated, and thus the loading experienced, by the wing).

As noted above, the flap being movable between the first and second positions by translation, for instance translation along the direction of the chord, This may be particularly advantageous in the fifth aspect of the invention, since such movement of the flap would have relatively little impact on steering of the aircraft. In contrast, if movement of the flap between the first and second positions involved rotation then movement of the flap for load alleviation may have an unwanted knock-on effect on the heading of the aircraft.

The method may further comprise:
determining a load being experienced by the wing after movement of the flap towards the second position;
comparing said load to a recovery threshold: and
if the load is below the threshold, moving the flap towards away from the second position and towards the first position.

This can allow the flap to move back towards its original position if the cause of undue loading has ceased or diminished.

The recovery threshold may be the same as the threshold. Alternatively, the recovery threshold may be higher than or lower than the threshold.

According to a sixth aspect of the invention there is provided a method of load alleviation in an aircraft according to the third aspect of the invention, the method comprising moving the flap between the first and second positions in response to changes in wing loading.

It will of course be appreciated that features described in relation to one aspect of the present invention may be incorporated into other aspects of the present invention. For example, the method of the invention may incorporate any of the features described with reference to apparatus of the invention and vice versa. Further, it is to be noted that methods described herein are not intended to be limited to the steps of those methods being performed in the order in which they are recited. It would be readily apparent to the skilled person where steps can, or cannot, be performed in a different order.

### DESCRIPTION OF THE DRAWINGS

Embodiments of the present invention will now be described by way of example only with reference to the accompanying schematic drawings of which:
Figure 1 shows a perspective view of an aircraft according to a first embodiment of the invention;
Figure 2 shows a schematic cross section of a wing of the aircraft of Figure 1;
Figure 3 shows a schematic cross section of the rear part of the wing of Figure 2, with a flap in a first position;
Figure 4 shows a schematic cross section of the rear part of the wing of Figures 2 and 3, with the flap in a second positon;
Figure 5 shows a schematic cross section of the rear part of the wing, with the flap in a third positon; and
Figure 6 is a schematic cross section of the rear part of the wing, showing an actuation mechanism for moving the flap.

### DETAILED DESCRIPTION

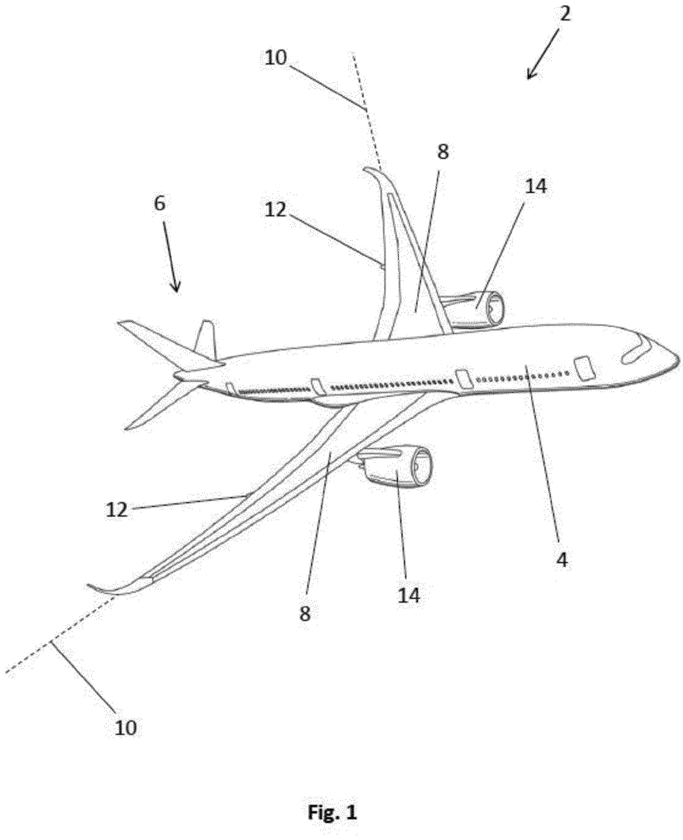

Figure 1 shows an aircraft 2 according to an embodiment of the invention. It has a body 4, a tail 6 and two wings 8. Each wing 8 extends generally laterally along a longitudinal axis 10, and has a fairing 12 (the very rear portion of which is visible in Figure 1) positioned part way along its length. Each wing 8 also supports an engine 14. The body 4, tail 6 and engines 14 are not material to the present invention, so will not be described in detail.

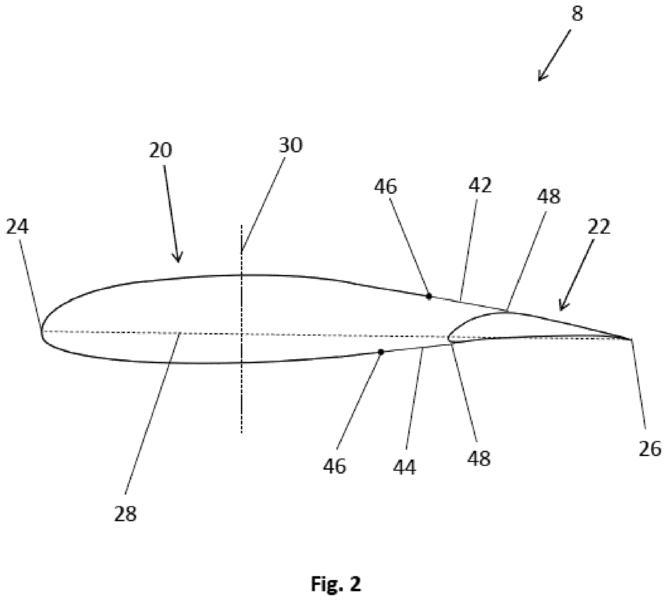

The structure of one of the wings 8 will now be described with reference to Figure 1 in combination with Figure 2, which shows a cross section of one of the wings 8. The two wings 8 are mirror images of one another, therefore the discussion below is equally applicable to either wing 8.

The wing 8 has a main portion 20 and movable flap 22. In this embodiment the main portion 20 is a fixed portion, but in other embodiments the main portion may be movable or may have a part that is movable (for instance a slat). A leading edge 24 of the wing 8 is provided on the main portion 20, and a trailing edge 26 of the wing 8 is provided on the flap 22. The wing defines a chord 28 which extends from the leading edge 24 to the trailing edge 26, and a thickness direction 30 which runs perpendicular to the longitudinal axis 10 and the chord 28.

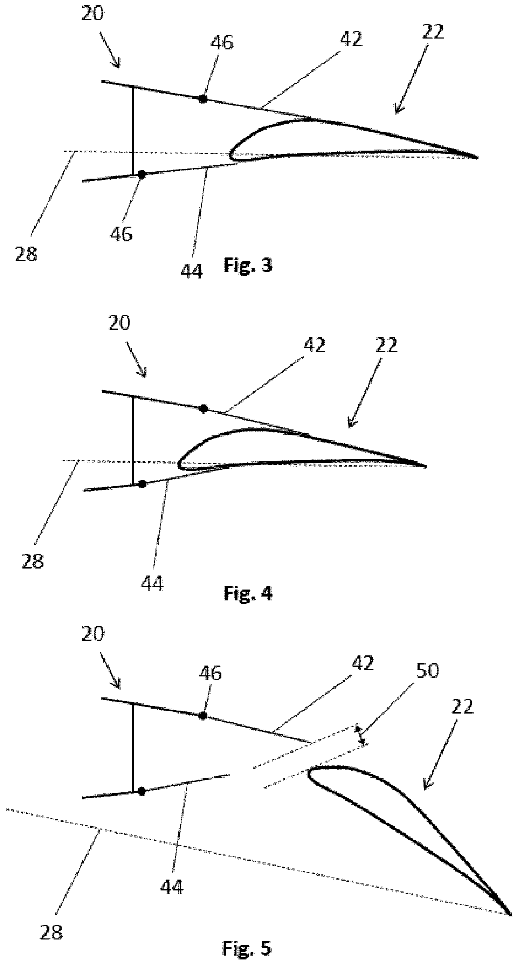

Figures 1 and 2 show the wing 8 with the flap 22 in a first position. The flap 22 is movable to a second position and a third position. Figures 3, 4 and 5 show corresponding views of the rear portion of the wing with the flap 22 in the first, second and third positions respectively. Figures 3 to 5 will now be referred to in combination with Figures 1 and 2.

It is noteworthy that the flap 22 is movable between the first and second positions purely through translation. In other words, no rotation of the flap 22 is needed when moving between the first and second positions. Indeed, in the second position and any position between the second position and the first position, the flap 22 can only move by translation.

In this embodiment, the flap 22 is movable between the first and second positions by moving it along the direction of the chord 28. This type of movement is sometimes referred to as "pure Fowler motion". To move from the first position to the second position the flap 22 moves forwards along the direction of the chord 28, and to move from the second position to the first position the flap 22 moves rearwards along the direction of the chord 28.

In the present embodiment the wing 8 is configured such that the flap 22 is movable between the first and second positions, and between the first and third positions, but the flap 22 cannot move between the second and third positions other than via the first position. To move between the first and third positions, the flap 22 moves both in translation and also in rotation. More particularly, to move from the first position to the third position the flap 22 moves backwards and also rotates such that the trailing edge 26 moves downwards (clockwise from the perspective of Figures 2 to 5). To move from the third position to the first position, the flap 22 moves forwards and rotates such that the trailing edge 26 moves upwards (anticlockwise from the perspective of Figures 2 to 5). In this embodiment, with the flap 22 in the third position or any position between the third position and the first position, the flap 22 can only move in combined rotation and translation.

With the flap 22 in the first position, the wing 8 is in a "low drag" configuration similar to that described above in relation to conventional aircraft. As with the conventional wing, with the wing 8 in the low drag configuration its chord 28 is relatively short and the wing 8 has a low angle of attack, therefore the lift produced will be relatively low, as will the drag. Equally, with the flap 22 in the third position, the wing is in a "high lift" configuration similar to that described above. With the wing 8 in the high lift configuration its chord 28 is longer and its angle of attack is larger, so more lift can be produced but at the expense of more drag.

With the flap 22 in the second position, the chord 28 of the wing 8 is even shorter than when the flap 22 is in the first position, and the angle of attack is not changed. More particularly, in this embodiment moving the flap 22 from the first position to the second position reduces the length of the chord 28 by around 5%. The reduction in chord means that slightly less lift is produced, but the drag produced by the wing 8 is also smaller. The wing may therefore be considered to be in an "extra low drag" configuration when the flap 22 is in the second position.

In this embodiment the wing 8 comprises an upper shroud panel 42 mounted on an upper surface of the wing 8, and a lower shroud panel 44 mounted on a lower surface of the wing 8. Each shroud panel 42, 44 is positioned to extend between the main portion 20 and the flap 22. The shroud panels 42, 44 are each pivotably attached to the main portion 20 by a hinge joint 46, and each has a trailing portion 48 which contacts the flap 22. The shroud panels 42, 44 are biased against the flap 22 by respective torsion springs (not visible) at their hinge joints 46. Being movably mounted on the main portion 20 and biased against the flap 22, the shroud panels 42, 44 remain in contact with the flap 22 as it moves between the first and second positions, pivoting slightly to adapt to the changes in wing geometry that result, thereby maintaining a smooth surface over the top and bottom of the wing 8.

The upper shroud panel 42 differs from the lower shroud panel 42 in that it is also connected to a deployment mechanism (not visible) which is arranged to pivot it upwards (against the bias of the torsion spring) so that it can function as a spoiler and/or air brake.

Although the shroud panels 42, 44 remain in contact with the flap 22 when it is in the first position or the second position, when the flap 22 is moved to the third position it parts from the shroud panels 42, 44 and thus forms an air flow gap 50. The flap 22 therefore acts as a "slotted flap" when in the third position.

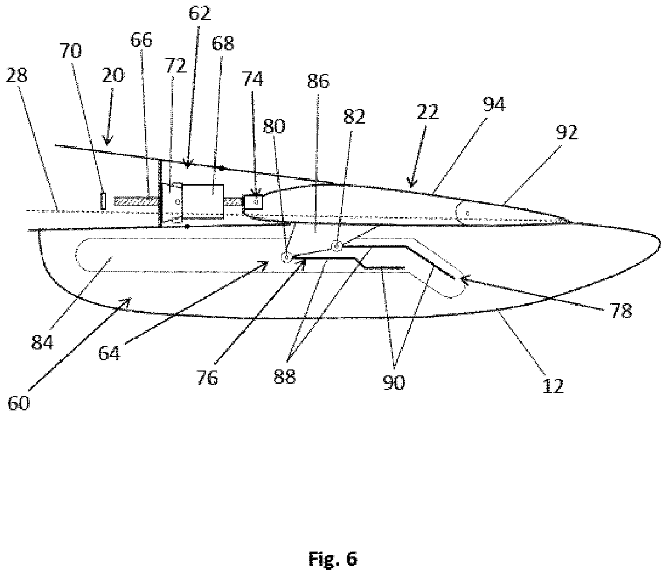

The actuation mechanism which is arranged to move the flap 22 between the first, second and third positions will now be described with reference to Figure 6, in combination with Figures 1-5. The actuation mechanism 60 has an actuator 62 and a guide mechanism 64. The actuator 62 is configured to cause the flap 22 to move relative to the main portion 20, while the guide mechanism 64 is configured to guide the movement of the flap 22 (under action of the actuator 62) so that its movement follows the desired path.

The actuator 62 of this embodiment is an electric linear actuator which has a screw shaft 66 and an electric motor 68 that has a drive gear (not visible) threadedly engaged with the screw shaft 66 to form a lead screw mechanism. The screw shaft 66 is attached to the flap 22, which prevents the shaft 66 from rotating. Accordingly, when the motor 68 rotates the drive gear (not visible), the screw shaft 66 (and thus the flap 22) is moved forwards or backwards. The geometry of the thread of the screw shaft 66 and drive gear (not visible) is selected to provide an anti-backdrive mechanism, so when the motor 68 is stationary the flap 22 is held in place. In this embodiment the actuator 62 is arranged to act directly on the flap 22, rather than acting on the flap 22 via an intermediate component or mechanism.

The actuator 62 also has a stop surface 70 and a gimbal 72. The stop surface 70 is positioned in front of the screw shaft 66 and acts to prevent it moving too far forwards, whereupon it may be able to damage other components. The gimbal 72 allows the motor 68 to pivot up and down so as to accommodate changes in the angle of the screw shaft 66 as the flap 22 moves between the first and third positions. For similar reasons, the screw shaft 66 is attached to the flap 22 by a pivot joint 74. This allows the flap 22 to pivot relative to the screw shaft 66, avoiding the need for the screw shaft 66 to move through as wide a range of angles as the flap 22.

The guide mechanism comprises a first track 76, a second track 78, a first runner 80 movable along the first track 76, and a second runner 82 movable along the second track 78. The first and second tracks 76, 78 of this embodiment take the form of slots provided in a support beam 84. The runners 80, 82 take the form of projections which are received through their respective slots 76, 78.

The support beam 84 is bolted to the structure of the main portion 20 of the wing, therefore the tracks 76, 78 are fixed relative to the main portion 20. The runners 80, 82, on the other hand, are fixed relative to the flap. In this embodiment the runners 80, 82 each project from a common mounting member 86 which is bolted to the underside of the flap 22. With the tracks 76, 78 fixed relative to the main portion 20 and the runners 80, 82 fixed relative to the flap 22, when the actuator 62 causes the flap 22 to move relative to the main portion 20, the runners 80, 82 move along their respective tracks 76, 78. The shape of the tracks 76, 78 guides the movement of the flap 22 and determines how it moves.

The first and second tracks 76, 78 have respective straight portions 88 which run parallel to one another. When the flap 22 is moved between the first and second positions, the runners 80, 82 run along the straight portions 88 of their respective tracks 76, 78. The runners 80, 82 therefore remain in the same position relative to one another. Accordingly, the common mounting member 86, and thus the flap 22, does not rotate. Hence, the flap 22 moves between the first and second positions through translation alone.

The first and second tracks 76, 78 also have respective portions 90 which converge/diverge with respect to one another. In this case the portions 90 converge rearwardly or converge forwardly. When the flap 22 is moved between the first and third positions, the runners 80, 82 run along the converging/diverging portions 90 of their respective tracks 76, 78. When the flap 22 moves from the first position to the third position, the portions 90 converge and the second runner 82 is moved downward relative to the first runner 80. This has the effect of rotating the common mounting member 86, and thus the flap 22, clockwise from the perspective of Figures 2 to 6 as the flap 22 moves rearwards. Conversely, when the flap 22 moves from the third position to the first position, the portions 90 diverge and the second runner 82 is moved upward relative to the first runner 80. This has the effect of rotating the common mounting member 86, and thus the flap 22, anticlockwise from the perspective of Figures 2 to 6 as the flap 22 moves forwards.

It is noteworthy that along the direction of the chord 28, the first and second tracks 76, 78 occupy different positions but overlap with one another. More particularly, the first track 76 occupies a position along the direction of the chord 28 that is nearer the front (i.e. nearer the leading edge), and the second track 78 occupies a position along the direction of the chord 28 that is nearer the rear (i.e. nearer the trailing edge), but the rear of the first track 76 and the front of the second track 78 overlap one another along the direction of the chord 28. In this particular embodiment, along the direction of the chord 28 the tracks 76, 78 overlap one another by around 60% of the length of each track 76, 78 (that is the length of each track along the direction of the chord, not the total length of that track).

It is also noteworthy that in this embodiment the first and second tracks 76, 78 overlap one another along the thickness direction 30. Indeed in this case, along the thickness direction 30 the first track 76 is overlapped in its entirety by the second track 78.

While the actuator 62 of the actuation mechanism 60 is housed inside the main portion 20 of the wing 8, the guide mechanism 64 is positioned below the main portion 20. To protect it and make it more aerodynamic, the guide mechanism 64 is housed within the fairing 12.

While this has been omitted from Figures 1-5 for the sake of simplicity, Figure 6 shows that the flap 22 has a movable tab 92. The trailing edge 26 of the wing 8 is provided on the tab 92 of the flap 22. The tab 92 is pivotable relative to a main body 94 of the flap 22, under action of a tab operation mechanism (not visible) which is operable independently of the actuation mechanism 60. Pivoting of the tab 92 moves the trailing edge 26, allowing fine adjustments of the wing geometry, over and above the adjustments made by moving the tab 22 in its entirety as discussed above. In this embodiment the tab 92 functions as an aileron.

A method of using the aircraft 2 according to the present embodiment will now be described, with continued reference to Figures 1 to 6. When not in use, the aircraft is generally kept with the flap 22 of each wing 8 in the first position. To take off, the flaps 22 are moved to the third position so as to place the wings 8 in the high lift configuration. To do this, the actuator 62 of each wing 8 extends the screw shaft 66 rearwards so as to push the flap 22 rearwards. As described previously, the tracks 76, 78 and runners 80, 82 of the guide mechanism 64 guide the flap 22 so that it rotates downwards as it moved back. When the wing is in the high lift configuration, the anti-backdrive mechanism of the actuator 62 holds the flap 22 in place.

The aircraft 2 then accelerates along a runway, takes off, and begins to climb while continuing to accelerate. As the aircraft 2 climbs, the tabs 92 of the flaps 22 of the wings 8 are used as ailerons, in conjunction with further ailerons (not visible) elsewhere on the wings 8, to bank the aircraft 2 and steer it onto a desired flightpath. As the aircraft climbs, the flaps 22 are moved from the third position to the first position to place the wings 8 in the low-drag configuration. The actuator 62 of each wing 8 retracts the screw shaft 66 forwards (by spinning the motor 68 in the opposite direction), which pulls the associated flap 22 forwards. As described above, the guide mechanisms 62 of the wings 8 guide their respective flaps 22 so that they rotate upwards as they move forwards.

Once the aircraft 2 has reached its intended cruising altitude, a controller (not visible) compares a set of variables to a corresponding set of thresholds. More particularly, it compares the weight of the aircraft, the speed of the aircraft and the outside air pressure to respective thresholds. If the weight of the aircraft is below its threshold and the speed and air pressure are above their respective thresholds, the conditions are favourable and the aircraft can sacrifice some lift in order to reduce drag. The controller therefore permits movement of the flaps 22 to the second position so as to place the wings 8 in the extra low drag configuration. Otherwise, the aircraft 2 cruises with the flaps 22 remaining in the first position.

If the controller permits it, the flaps 22 may be moved to the second position automatically or following pilot input. In either case, the actuator 62 of each wing 8 retracts its screw shaft 66 further forwards, pulling the associated flap 22 further forwards and thereby shortening the chord 28 and reducing drag. As noted above, the guide mechanisms 64 guide the flaps 22 to move from the first position to the second position through translation alone, more particularly through pure Fowler motion. The aircraft 2 then cruises with the wings 8 in the extra low drag configuration. If the aircraft slows down, or ascends high enough for air pressure to drop significantly, it may be necessary to return the flaps 22 to the first position (or to a position between the first and second positions). Otherwise, the aircraft 2 may cruise with the flaps 22 in the second position until it nears its destination.

When it is time for the aircraft 2 to begin its descent, the flaps 22 are moved back to the first position using the actuation mechanisms 60 of the wings 8. When the aircraft 2 is coming in to land, the flaps 22 are moved back to the third position (i.e. the wings 8 are placed back into the high lift configuration) so that the aircraft can decelerate to landing speed while still generating sufficient lift. Once the aircraft 2 touches down, the upper shroud panels 42 are rotated upwards by their respective deployment mechanisms (not visible) to act as spoilers to cut lift, and to act as air brakes in conjunction with further air brakes (not visible) elsewhere on the wings 8. The aircraft 2 then slows to a taxi, and eventually to a standstill.

Where in the foregoing description, integers or elements are mentioned which have known, obvious or foreseeable equivalents, then such equivalents are herein incorporated as if individually set forth. Reference should be made to the claims for determining the true scope of the present invention, which should be construed so as to encompass any such equivalents. It will also be appreciated by the reader that integers or features of the invention that are described as preferable, advantageous, convenient or the like are optional and do not limit the scope of the independent claims. Moreover, it is to be understood that such optional integers or features, whilst of possible benefit in some embodiments of the invention, may not be desirable, and may therefore be absent, in other embodiments.

The term 'or' shall be interpreted as 'and/or' unless the context requires otherwise.

## Claims

1. An aircraft wing defining a chord that extends from a leading edge to a trailing edge of the wing, the wing comprising:
a main portion which provides the leading edge;
a movable flap which provides the trailing edge; and
an actuation mechanism arranged to move the flap relative to the main portion, the actuation mechanism comprising an actuator and a guide mechanism,
wherein:
the guide mechanism comprises first and second tracks each fixed relative to the main portion, and first and second runners each being fixed relative to the flap;
the first runner is movable along the first track and the second runner is movable along the second track, movement of the runners along the tracks co-operatively guiding the movement of the flap; and
along the direction of the chord, the first and second tracks occupy different positions but overlap with one another.

2. An aircraft wing according to claim 1 wherein along the direction of the chord, the first and second tracks overlap by at least 30% of the length of one or both of the tracks.

3. An aircraft wing according to claim 1 or 2 wherein along the direction of the chord, the first and second tracks overlap by less than 70% of the length of one or both of the tracks.

4. An aircraft wing according to any preceding claim wherein along a thickness direction which is normal to the chord of the wing and to a longitudinal axis of the wing, the first and second tracks overlap with one another.

5. An aircraft wing according to claim 4 wherein in the thickness direction the first and second tracks overlap with each other by at least 50% of the length of one or both of the tracks.

6. An aircraft wing according to any preceding claim wherein the first track has a straight portion which runs substantially parallel to a straight portion of the second track.

7. An aircraft wing according to any preceding claim wherein the first and second tracks comprise respective sections which converge towards one another or diverge away from one another.

8. An aircraft wing according to any preceding claim wherein the first and second runners are mounted to a common mounting member, the common mounting member being attached to the flap.

9. An aircraft wing according to any preceding claim wherein the flap comprises a main body and a movable tab which provides the trailing edge of the wing, and the wing comprises a tab operation mechanism arranged to move the tab relative to the main body of the flap.

10. An aircraft wing having a front edge, and a rear edge provided on a movable flap of the wing, wherein:
the wing defines a chord which extends between the front edge and the rear edge;
the wing further comprises a drive assembly arranged to move the flap;
the drive assembly has first and second tracks which occupy different but overlapping positions along the direction of the chord; and
the flap has first and second runners fixed relative to the flap, the first runner being movable along the first track and the second runner being movable along the second track so as to cooperatively direct the movement of the flap.

11. An aircraft comprising a wing according to any preceding claim.

12. A method of using an aircraft according to claim 11, the method comprising:
ascending to cruising altitude;
while at cruising altitude, moving the flap from a first position in which the chord has a first length, to a second position in which the chord has a second length which is shorter than the first length.

13. A method according to claim 12 wherein the second length of the chord is at least 3% shorter than the first length of the chord.

14. A method according to claim 12 or 13 further comprising comparing the weight of the aircraft to a threshold, and moving the flap from the first position to the second position only if the weight of the aircraft is below the threshold.

15. A method according to any one of claims 12 to 14 wherein the step of moving the flap from the first position to the second position comprises moving the flap substantially only in translation.
